# EUROPÄISCHE PATENTSCHRIFT

(11) **EP 2 647 969 B1**
(45) Veröffentlichungstag und Bekanntmachung des Hinweises auf die Patenterteilung: **02.06.2021**
(21) Anmeldenummer: 13001702.3
(22) Anmeldetag: 03.04.2013
(51) Int. Cl.: G01F 1/58

(54) **Magnetisch-induktives Durchflussmessgerät**
Magnetic-inductive flow measuring apparatus
Débitmètre à induction magnétique

(30) Priorität: 05.04.2012 DE 102012006891
(43) Veröffentlichungstag der Anmeldung: 09.10.2013
(73) Patentinhaber: Krohne AG, 4019 Basel (CH)
(72) Erfinder: VAN WILLINGEN, Arnould Leendert, NL - 2901 KC Cappelle a/d (NL); POORTMAN, Wenny, NL - 3314 GD Dordrecht (NL)
(74) Vertreter: Gesthuysen Patentanwälte

(56) Entgegenhaltungen:
- EP-A1- 0 543 053
- EP-A2- 2 192 390
- DE-A1-102004 018 747

## Beschreibung

Die Erfindung betrifft ein magnetisch-induktives Durchflussmessgerät zur Durchflussmessung eines strömenden Mediums mit einer Messleitung, mit einer Magnetfelderzeugungseinrichtung zur Erzeugung eines die Messleitung wenigstens teilweise im Wesentlichen senkrecht zu einer Längsachse der Messleitung durchsetzenden - insbesondere wechselnden - Magnetfeldes, mit mindestens zwei - insbesondere das Medium berührenden - Elektroden zum Abgreifen einer in dem strömenden Medium induzierten Messspannung.

Das grundlegende Prinzip eines magnetisch-induktiven Durchflussmessgeräts zur Durchflussmessung eines strömenden Mediums geht auf Faraday zurück, der bereits im Jahre 1832 vorgeschlagen hat, das Prinzip der elektrodynamischen Induktion zur Messung der Strömungsgeschwindigkeit eines strömenden Mediums anzuwenden. Nach dem faradayschen Induktionsgesetz entsteht in einem strömenden Medium, das Ladungsträger mit sich führt und durch ein Magnetfeld hindurchfließt, eine elektrische Feldstärke senkrecht zur Strömungsrichtung und senkrecht zum Magnetfeld. Das faradaysche Induktionsgesetz wird bei magnetisch-induktiven Durchflussmessgeräten dadurch ausgenutzt, dass mittels einer Magnetfelderzeugungseinrichtung, die üblicherweise zwei bestromte Magnetspulen aufweist, ein Magnetfeld erzeugt und wenigstens teilweise durch eine Messleitung geführt wird, wobei das erzeugte Magnetfeld wenigstens eine Komponente aufweist, die senkrecht zur Strömungsrichtung verläuft. Innerhalb des Magnetfeldes liefert jedes sich durch das Magnetfeld bewegende und eine gewisse Anzahl von Ladungsträgern aufweisenden Volumenelement des strömenden Mediums mit der in diesem Volumenelement entstehenden Feldstärke einen Beitrag zu einer über die Elektroden abgreifbaren Messspannung.

Für die Bestimmung des Durchflusses eines elektrisch leitfähigen Mediums ist es erforderlich, dass die Messleitung vollständig mit dem Medium befüllt ist oder, wenn die vollständige Füllung nicht gegeben ist, zumindest der Grad der Befüllung bekannt ist, so dass die Messwerte passend korrigiert werden können. Solche Korrekturwerte und deren Bestimmung werden beispielsweise diskutiert in der Patentschrift DE 196 37 716 C1. Das Maß der Befüllung der Messleitung lässt sich gemäß der Patentschrift DE 196 55 107 C2 beispielsweise kapazitiv ermitteln. Dabei bilden die Elektroden mit dem Medium als Dielektrikum einen Kondensator, dessen Kapazität gemessen wird. Gemäß der Gebrauchsmusterschrift DE 20 2004 009 798 U1 wird der Füllstand einer Flüssigkeit im Messleiter durch das Laufzeitverfahren ermittelt. Eine Messung auch für eine teilgefüllte Messleitung wird gemäß der Offenlegungsschrift DE 10 2009 045 274 A1 dadurch ermöglicht, dass die oberhalb der Messleitung angeordnete Elektrode einen elektrisch leitfähigen Fortsatz aufweist, der sich in der Messleitung befindet und im Messbetrieb in Verbindung mit dem Medium ist. Die Offenlegungsschrift DE 28 56 240 beschreibt eine abwechselnde Messung von Durchfluss und Befüllungsgrad, wofür einmal ein konstantes und einmal ein wechselndes Magnetfeld erzeugt wird

Weitere magnetisch-induktive Durchflussmessgeräte sind in der DE 10 2004 018747 A1, EP 2 192 390 A2 oder in der EP 0 543 053 A1 beschrieben.

Es ergibt sich, dass im Stand der Technik teilweise unterschiedliche Messprinzipien kombiniert werden, um Aussagen über den Füllstand und den Durchfluss zu erhalten. Teilweise werden die Werte für Durchfluss und Füllstand auch zu unterschiedlichen Zeitpunkten gewonnen. Folglich liegt der Erfindung die Aufgabe zugrunde, ein eingangs in seinem grundsätzlichen Aufbau beschriebenes magnetisch-induktives Durchflussmessgerät vorzuschlagen, bei dem die Messung des Grads der Befüllung der Messleitung auf möglichst einfache Weise und insbesondere möglichst zeitgleich mit der Messung des Durchflusses erfolgt.

Das nach der Erfindung ausgebildete magnetisch-induktive Durchflussmessgerät ist zunächst und im Wesentlichen dadurch gekennzeichnet, dass mindestens eine - insbesondere außerhalb der Messleitung angeordnete - Zusatzmagnetfelderzeugungseinrichtung zur Erzeugung eines die Messleitung wenigstens teilweise durchsetzenden - insbesondere wechselnden - Zusatzmagnetfeldes vorgesehen ist. Das Zusatzmagnetfeld verläuft zumindest teilweise im Wesentlichen parallel zu der Längsachse der Messleitung in dem Bereich der Messleitung, in dem sich die zwei Elektroden befinden.

In der Messleitung, die beispielweise aus einem faserverstärkten Polymer oder einem nicht magnetischen Metall besteht, werden zwei Magnetfelder erzeugt, die auf das elektrisch leitfähige Medium wirken Dies ist zunächst das Magnetfeld, das der eigentlichen Durchflussmessung dient und das sowohl senkrecht zur Längsachse und damit im Allgemeinen auch senkrecht zur Flussrichtung des Mediums als auch senkrecht zu einer gedachten Verbindungsachse zwischen den Elektroden verläuft. Dieses Magnetfeld ist ursächlich für die von den zwei Elektroden abgreifbare Induktionsspannung verantwortlich.

Dazu gesellt sich ein Zusatzmagnetfeld, das parallel zur Längsachse verläuft. Dieses Zusatzfeld steht dadurch senkrecht auf dem zuerst genannten Magnetfeld und senkrecht auf einer Ebene, in der die beiden Elektroden liegen, und dient der Ermittlung des Maßes, um das die Messleitung mit dem Medium gefüllt ist. Das Zusatzfeld ist dabei vorzugsweise homogen über die Messebene zwischen den zwei Elektroden. Die Spannung, die sich bedingt durch das Zusatzmagnetfeld ergibt und die an den beiden Elektroden anliegt, ist dabei abhängig vom Medium bzw. von der Quantität an Medium, das von dem Zusatzmagnetfeld durchsetzt ist. Daher ist diese Spannung bzw. dieser Spannungsanteil am von den zwei Elektroden abgreifbaren Spannungssignal ein Maß für den Füllstand des Mediums.

Von den Elektroden wird in einer Ausgestaltung insbesondere ein Signal in Form eines Spannungssignals abgegriffen, das sich insgesamt aus der Überlagerung der Effekte der beiden Magnetfelder ergibt. Damit ergibt sich der Vorteil, dass Durchfluss und Befüllungsgrad simultan gemessen werden, so dass auch der Messwert für den Durchfluss passend korrigiert werden kann. Um aus einem Signal die zwei Informationen über Durchfluss und Füllstand (im Folgenden wird unter Füllstand allgemein ein Maß für den Grad der Befüllung der Messleitung durch das Medium verstanden) leichter zu extrahieren, ist in einer vorteilhaften Ausgestaltung insbesondere vorgesehen, dass die Magnetfelderzeugungseinrichtung ein sich mit einer ersten Frequenz wechselndes Magnetfeld und die Zusatzmagnetfelderzeugungseinrichtung ein sich mit einer zweiten Frequenz wechselndes Zusatzmagnetfeld erzeugt. Dabei sind die erste Frequenz und die zweite Frequenz unterschiedlich. Liegt die erste Frequenz zumeist zwischen 1 Hz und 100 Hz, so liegt die zweite Frequenz für das Zusatzmagnetfeld beispielsweise zwischen 100 Hz und 10 kHz. Die Auswertung der Messsignale erfolgt anschließend vorteilhafterweise frequenzselektiv, beispielsweise durch Frequenzfilterung des Gesamtsignals.

In einer weiteren Ausgestaltung weisen die Frequenzverläufe der jeweils als Wechselfelder ausgestalteten Magnet- bzw. Zusatzmagnetfelder unterschiedliche Formen auf. So wird in einer Ausgestaltung das Zusatzmagnetfeld mit einem Wechselstrom oder mit einem linear die Frequenz - beispielsweise mit einem Sägezahnverlauf - ändernden Signal erzeugt. Das Magnetfeld kann dabei einen anderen oder einen identischen Frequenzverlauf aufweisen. Durch deutlich unterschiedliche Frequenzen lassen sich die Signale besser separieren. In einer alternativen Ausgestaltung oder z.B. für Kalibrierungszwecke lassen sich die beiden Messungen auch getrennt voneinander durchführen, indem die Magnetfelderzeugungseinrichtung bzw. die Zusatzmagnetfelderzeugungseinrichtung entsprechend angesteuert werden. Die Zusatzmagnetfelderzeugungseinrichtung befindet sich insbesondere elektrisch isoliert von einer ggf. metallischen Wand der Messleitung und ist dafür beispielweise außerhalb der Messleitung oder in einem Liner angeordnet.

Erfindungsgemäß ist vorgesehen, dass die - insbesondere im Wesentlichen identisch ausgestalteten - zwei Elektroden streifenförmig sind. Um den Füllstand möglichst gut zu bestimmen, kann es vorteilhaft sein, einen möglichst großen Umfang der Messleitung zu umfassen. Daher bieten sich streifenförmige Elektroden an, die entlang des Umfangs mit ihrer Längsachsen ausgerichtet sind. Dabei befinden sich die zwei Elektroden längs der Längsachse der Messleitung im Wesentlichen auf einer Höhe einander gegenüberliegend. In einer Ausgestaltung erstreckt sich zumindest eine streifenförmige Elektrode um fast die Hälfte des Innenumfangs der Messleitung. Die Vorteile von streifenförmigen Elektroden bestehen darin, dass sie im Vergleich zu Punktelektroden "tiefer" in das Medium eindringen und dadurch weniger beeinflusst werden von lokalen Störungen in der Nähe der Innenwand der Messleitung. Weiterhin verringert sich die Empfindlichkeit gegenüber Schaumbildung auf der Oberfläche des Mediums. Und schließlich reduziert sich die Abhängigkeit von Störungen im Flussprofil des Mediums.

Die zuvor genannten Ausgestaltungen beziehen sich im Wesentlichen auf teilweise bekannte Ausgestaltungen von magnetisch-induktiven Durchflussmessgeräten. Dabei können die zwei Elektroden unterschiedlich oder auch identisch ausgestaltet sein. Durch die Variation der Form der Elektroden lässt es sich auch in Verbindung mit dem Zusatzmagnetfeld bewirken, dass das Zusatzmagnetfeld im Bereich der von den Elektroden eingegrenzten Messebene möglichst homogen ist. Weiterhin können die Elektroden meumsberührend oder frei von einer Berührung mit dem Medium sein. In einer zusätzlichen Ausgestaltung sind mehr als zwei Elektroden vorgesehen. Die folgenden Ausgestaltungen beziehen sich verstärkt darauf, dass mit der Messanordnung auch der Füllstand des Mediums ermittelt wird.

Erfindungsgemäß weisen die streifenförmigen zwei Elektroden jeweils zwei Stirnseiten auf, wobei bei Anordnung der Elektroden z.B. entlang einer Umfangslinie der Messleitung jeweils eine Stirnseite der einen Elektrode benachbart ist zu einer Stirnseite der anderen Elektrode, es gibt also insgesamt zwei Paare benachbarter Stirnseiten der Elektroden. Sind die streifenförmigen Elektroden an den Seiten der Messleitung angebracht, so befindet sich bei einer im Wesentlichen horizontalen Lagerung der Messleitung ein Paar Stirnseiten unterhalb und das andere Paar oberhalb relativ zu einem fließenden Medium bzw. zueinander versetzt in Wirkrichtung der Schwerkraft. Es hat sich überraschenderweise herausgestellt, dass es vorteilhaft sein kann, die elektrischen Potential der beiden Elektroden in der Nähe benachbarter Stirnseiten der Elektroden abzugreifen, Insbesondere lässt sich auch von jedem der Paare benachbarter Elektrodenstirnseiten ein Spannungsmesssignal abgreifen, wobei die Messsignale je nach Ausgestaltung einzeln oder kombiniert ausgewertet werden. In einer Ausgestaltung werden beide Signale addiert und in einer anderen Ausgestaltung ein Mittelwert gebildet. Durch die unterschiedlichen Signalabgriffe lassen sich beispielsweise Kalibrationen bei unterschiedlichen Füllständen vermeiden bzw. über die jeweils abgegriffenen Spannungssignale lässt sich die Genauigkeit der Messung erhöhen. In einer alternativen Ausgestaltung erfolgt der Signalabgriff an anderen Bereichen der Elektroden außer den Stirnseiten. In einer zusätzlichen Ausgestaltung werden insbesondere für die Messung des Füllstands die zwei Elektroden an den Stirnseiten außerhalb der Messleitung miteinander kurzgeschlossen.

In einer mit der zuvor genannten Ausgestaltung in Verbindung stehenden Ausgestaltung ist mindestens eine Auswerteeinrichtung vorgesehen, die mindestens ein von den zwei Elektroden abgegriffenes Messsignal frequenzselektiv auswertet. Wie oben in einer Ausgestaltung beschrieben, unterscheiden sich die Frequenzen des Magnet- und Zusatzmagnetfeldes voneinander. Dieser Frequenzunterschied wird daher in der Auswertung dafür verwendet, um die durch das jeweilige Feld erzeugten induzierten Spannungen voneinander zu trennen. Daher wertet die Auswerteeinrichtung in dieser Ausgestaltung zumindest ein von den Elektroden abgegriffenes Messsignal frequenzselektiv aus. In einer Ausgestaltung ermittelt die entsprechend ausgestaltete Auswerteeinrichtung zumindest aus dem mindestens einen Messsignal mit Hilfe eines Korrekturfaktors und/oder mit Hilfe von Kalibrationsdaten den Füllstand des Mediums. Der Korrekturfaktor ist dabei insbesondere von der Geometrie des Durchflussmessgerätes im Bereich der zwei Elektroden abhängig. Für die Geometrie relevante Größen sind beispielsweise die Form der Seitenwand der Messleitung im Bereich der von den Elektroden aufgespannten Messebene, die Form und Anordnung der Elektroden bzw. die Beschaffenheit des Zusatzmagnetfeldes zwischen den zwei Elektroden. Weiterhin kann der Korrekturfaktor auch von den Eigenschaften des Mediums abhängig sein. In einer speziellen Ausgestaltung ist die Auswerteeinrichtung derartig ausgestaltet, dass die Auswerteeinrichtung zumindest aus dem mindestens einen Messsignal einen effektiven Füllstandswert ermittelt und daraus über die Multiplikation mit der Zahl 2 den Füllstand des Mediums ermittelt. Aus der Auswertung des Messsignals bestimmt in dieser Ausgestaltung die Auswerteeinrichtung einen Füllstandswert, der der Hälfte des tatsächlich vorliegenden Füllstands entspricht. Mit der letzten Ausgestaltung ist in einer Variante insbesondere verbunden, dass die Messleitung im Bereich der zwei Elektroden einen kreisrunden Querschnitt aufweist, dass die Elektroden streifenförmig ausgestaltet sind und seitlich symmetrisch zueinander auf der Messleitung, z.B. auf der Innenseite angebracht sind.

Auf die Ausgestaltung und Anordnung der zwei Elektroden insbesondere im Rahmen der zuvor genannten Ausgestaltungen bezieht sich eine Variante, die vorsieht, dass die benachbarten Stirnseiten relativ zum Umfang der Messleitung voneinander beabstandet sind, wobei der Abstand zwischen den benachbarten Stirnseiten maximal einem 45°-Winkel - gemessen vom Mittelpunkt der Messleitung - entspricht.

In einer Variante weist die Zusatzmagnetfelderzeugungseinrichtung mindestens zwei Spulen auf, Dabei ist längs der Längsachse der Messleitung eine Spule vor und die andere Spule hinter den zwei Elektroden angeordnet. In einer Ausgestaltung sind die beiden Spulen im Wesentlichen identisch ausgestaltet und werden in einer weiteren Umsetzung vom gleichen Strom durchflossen. Der Abstand zwischen den zwei Spulen ist dabei in einer Ausgestaltung kleiner als ein Viertel des Durchmessers der Messleitung, wobei sich diese Ausgestaltung nicht unbedingt auf eine im Querschnitt kreisrunde Messleitung bezieht, so dass unter Durchmesser der mittlere Abstand zwischen einander gegenüberliegenden Abschnitten der Messleitung verstanden sei.

Im Einzelnen gibt es eine Vielzahl von Möglichkeiten, das erfindungsgemäße Durchflussmessgerät auszugestalten und weiterzubilden. Dazu wird verwiesen einerseits auf die dem Patentanspruch 1 nachgeordneten Patentansprüche, andererseits auf die folgende Beschreibung von einem Ausführungsbeispiel in Verbindung mit der Zeichnung. In der Zeichnung zeigen
- Fig, 1: eine schematische, im Wesentlichen die funktionalen Wirkzusammenhänge verdeutlichende räumliche Darstellung eines Durchflussmessgerätes,
- Fig. 2: einen Schnitt durch die Messleitung des in der Fig. 1 dargestellten Messgerätes und
- Fig. 3: einen Teil der Fig. 2 zur Verdeutlichung der relevanten Geometrie.

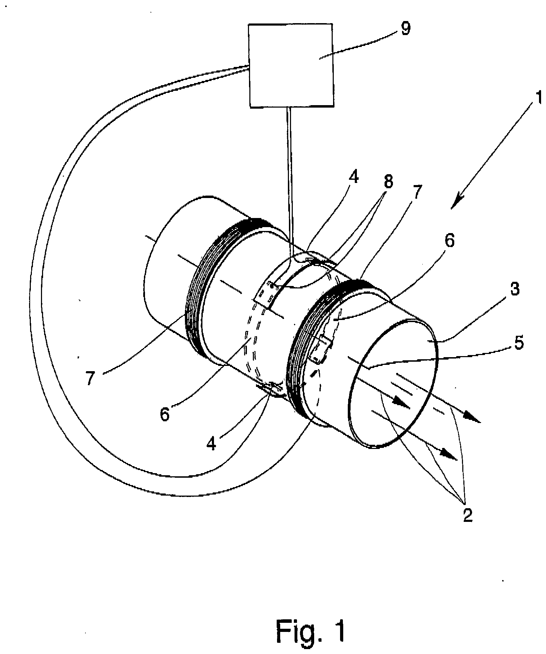

In der Fig. 1 und Fig. 2 bzw. Fig. 3 ist jeweils schematisiert eine Variante eines erfindungsgemäßen Messgerätes 1 dargestellt,

Die Fig. 1 zeigt ein magnetisch-induktives Durchflussmessgerät 1 zur Messung des Durchflusses und des Füllstands eines fließfähigen und elektrisch leitfähigen Mediums 2 innerhalb der Messleitung 3. Unter Füllstand sei dabei im Allgemeinen das Maß verstanden, mit dem das Medium 2 die Messleitung 3 ausfüllt. Dieser Wert ist für die Bestimmung des Durchflusses wesentlich und wird beim erfindungsgemäßen Durchflussmessgerät 1 ermittelt. Hier nur schematisch angedeutet, befindet sich ober- und unterhalb der Messleitung 3 die Magnetfelderzeugungseinrichtung 4 zur Erzeugung eines Magnetfeldes, das senkrecht zur Längsachse 5 der Messleitung 3 und damit insbesondere senkrecht zur Fließrichtung des Mediums 2, bei dem es sich hier als ein Beispiel um eine strömende Flüssigkeit (verdeutlicht durch die Pfeile) handelt, verläuft. Die Magnetfelderzeugungsvorrichtung 4 ist hier nur ganz schematisch dargestellt als zwei sich gegenüberstehende Polschuhe, Nicht explizit dargestellt sind in diesem Zusammenhang - da aus dem Stand der Technik hinreichend bekannt - die Magnetfeld erzeugenden Spule(n).

Seitlich sind die zwei hier streifenförmig ausgestalteten Elektroden 6 vorgesehen, deren Verbindungslinien senkrecht auf der Längsachse 5 und senkrecht auf dem zuvor genannten Magnetfeld stehen. Diese Elektroden 6 erlauben den Abgriff der im Medium 2 durch das von der Magnetfelderzeugungseinrichtung 4 erzeugten induzierten Spannung, die ein Maß für den Durchfluss des Mediums 2 ist. Die zwei einander gegenüberliegenden Elektroden 6 spannen insbesondere eine Messebene in der Messleitung 3 auf, die im Wesentlichen senkrecht zur Längsachse 5 der Messleitung 3 angeordnet ist.

Für die Messung des Füllstands des Mediums 2 ist die Zusatzmagnetfelderzeugungseinrichtung 7 vorgesehen, die hier von zwei sich axial längs der Längsachse 5 vor und hinter den Elektroden 6 befindlichen Spulen gebildet wird. Durch diese wird ein (Zusatz-)Magnetfeld erzeugt, das in Richtung der Längsachse 5 orientiert ist, also senkrecht zu dem Feld steht, das von der Magnetfelderzeugungseinrichtung 4 generiert wird. Das von der Zusatzmagnetfelderzeugungseinrichtung 7 erzeugte Feld durchsetzt dabei insbesondere den von den zwei Elektroden 6 umfassten Raum der Messleitung 3. Die streifenförmigen Elektroden 6 weisen jeweils zwei Stirnseiten 8 auf, die zwei Paare benachbarter Stirnseiten 8 bilden. Die Stirnseiten 8 sind dabei räumlich voneinander beabstandet und elektrisch voneinander isoliert, Durch das strömende Medium 2 und das insbesondere wechselnde von der Zusatzmagnetfelderzeugungseinrichtung 7 erzeugte Zusatzmagnetfeld ergibt sich ein Spannungssignal in den Elektroden 6, das die Ermittlung des Füllstands oder zumindest eines Korrekturwerts für die Ermittlung des Durchflusses des Mediums 2 erlaubt. Diese Berechnung bzw. Auswertung des von den zwei Elektroden 6 abgegriffenen Spannungssignals wird von einer Auswerteeinrichtung 9 vorgenommen, die mit den beiden Elektroden 6 hier unmittelbar verbunden ist. In anderen - hier nicht dargestellten - Varianten erfolgt die Verbindung zwischen den Elektroden 6 und der Auswerteeinrichtung 9 mittelbar über weitere Komponenten. In der dargestellten Variante wird jeweils vom Paar der oberen bzw. der unteren Stirnseiten 8 ein Messsignal abgegriffen und der Auswerteeinheit 9 zugeführt. Auf die elektrische Isolation der Elektroden 6 voneinander wird dabei weiterhin geachtet. Die Auswerteinrichtung 9 erlaubt insbesondere eine frequenzselektive Auswertung der Messsignale.

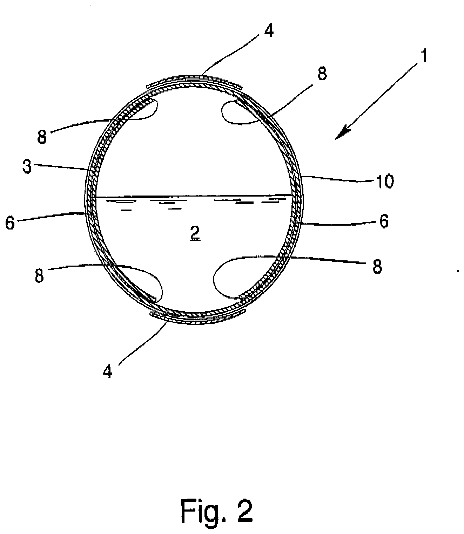

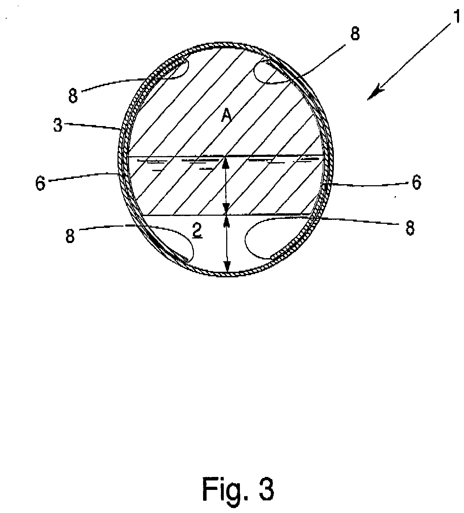

Die Abbildungen Fig. 2 und Fig. 3 zeigen einen Schnitt durch das Durchflussmessgerät 1 der Fig. 1 auf der Höhe der Elektroden 6. Zu erkennen ist, dass die Elektroden 6 sich streifenförmig um den Innenumfang der hier kreisrunden Messleitung 3 erstrecken. Die Form der Messleitung 3 kann dabei beliebig sein, es kann auch ein offenes oder geschlossenes Gerinne vorliegen. Die Elektroden 6 sind identisch ausgestaltet und liegen im Wesentlichen symmetrisch zueinander. Das von der Zusatzmagnetfelderzeugungseinrichtung 7 erzeugte Zusatzmagnetfeld steht senkrecht auf der Zeichnungsebene und das von der Magnetfelderzeugungseinrichtung 4 generierte Magnetfeld verläuft parallel zur Zeichnungsebene. Von dem oberen und unteren Paar der Stirnseiten 8 der Elektroden 6 werden jeweils Messsignale abgegriffen, die abhängig sind von der induzierten Spannung, die sich durch den Durchsatz des Zusatzmagnetfeldes durch die von den zwei Elektroden 6 seitlich eingefassten Messebene ergibt. In der Fig 3 sind dabei bis auf die Messleitung 3 und die Elektroden 6 die anderen Komponenten für die Übersichtlichkeit entfallen.

Aus den Messsignalen lässt sich ein effektiver Füllstand ermitteln, der bei dem dargestellten Aufbau im Wesentlichen der Hälfte des wirklichen Füllstandes des Mediums 2 entspricht (siehe Fig, 3). Der effektive Füllstand bezieht sich dabei auf die Höhe des effektiven leitenden Pfades über Grund der Messleitung, der die für die Messung wirksame Fläche A der Messebene umschließt. Für die Berechnung gilt, dass die induzierte Spannung sich aus der zeitlichen Änderung des magnetischen Flusses ergibt. Dabei bestimmt sich der Fluss wiederum über das Flächenintegral über das Zusatzmagnetfeld (B) in der Fläche A. Eine weitere Abhängigkeit ergibt sich durch die zeitliche Änderung des Füllstands (also dA/dt) des Mediums 2. Wird daher insbesondere ein zusätzliches magnetisches (Zusatz)Wechselfeld (dB/dt) erzeugt, so lässt sich eine Spannung (U) abgreifen, die ein Maß für die gefüllte Fläche (A) ist. Von den zwei Elektroden 6 wird dabei insbesondere nur die induzierte Spannung abgegriffen.

Sei A die effektiv wirksame Fläche zwischen den zwei Elektroden 6 und B das Zusatzmagnetfeld, so ergibt sich im Wesentlichen für die gemessene Spanung U = B ^{∗} dA/dt + A ^{∗} dB/dt, In der Fig. 3 ist die Fläche A, die sich über den gesamten Innenbereich zwischen den Elektroden 6 bis hin zur effektiven Füllhöhe erstreckt, durch eine Schraffur gekennzeichnet. Das füllstandsabhängige Wechselstromsignal U kann dabei beispielsweise über einen Vorverstärker und eine Integratorschaltung ermittelt werden. Der Wert für A^{∗}dB/dt kann sich abhängig vom Durchmesser der Messleitung 3 zwischen dem kleinsten zum größten Durchmesser um den Faktor 10 bis 100 ändern. Dies liegt daran, dass A proportional dem Quadrat des Durchmessers und B antiproportional dem Durchmesser ist. Um die Messungen zu optimieren, bestehen Einstellgrößen in der Frequenz des wechselnden Zusatzmagnetfeldes B, wobei der Wert von A^{∗}dB/dt in erster Näherung proportional der Frequenz des Feldes B ist. Weiterhin lässt sich die Anzahl der Windungen der Spulen passend wählen, die der Erzeugung des Zusatzmagnetfeldes dienen. Dabei ist die Größe des Zusatzmagnetfeldes B und dadurch der Wert proportional der zeitlichen Änderung A^{∗}dB/dt in erster Näherung proportional der Anzahl der Windungen der das Zusatzmagnetfeld verursachenden Spulen. Weiterhin ist die Stärke des Magnetfelds B in erster Näherung umgekehrt proportional zum Abstand zwischen den Spulen, so dass über die Variation dieses Abstands auch der Faktor dB/dt beeinflusst werden kann. Da die Querschnitte der Messleitung 3 je nach Ausgestaltung üblicherweise zwischen 1 cm und 1 m liegen, erlauben die zuvor genannten Größen die Einstellung der Signalamplituden derart, dass im Wesentlichen eine Auswerteeinrichtung für jeglichen Durchmesser der Messleitung Verwendung findet. In der gezeigten Ausgestaltung ergibt sich der wirkliche Füllstand, indem der ermittelte effektive Füllstand mit dem Faktor Zwei multipliziert wird. In anderen Geometrien ergibt sich der wirkliche Füllstand durch einen entsprechend zu bestimmenden Korrekturwert. Alternativ oder ergänzend werden Kalibrationsdaten für unterschiedliche Füllstände ermittelt und bei der Auswertung der Messsignale verwendet.

Das Messgerät 1 erlaubt es überdies in einer Methode, die einfacher als gemäß dem Stand der Technik ist, die Impedanz der Elektroden 6 zu messen und daraus auch einen Wert für die Leitfähigkeit des Mediums 2 zu erhalten. Da das Zusatzmagnetfeld eine Spannung in den Elektroden 6 erzeugt, ist es dafür ausreichend, einen bekannten Widerstand parallel zu Masse hinzu- und wegzuschalten.

Um die Messleitung 3 herum ist noch eine Referenzleitung 10 vorgesehen. In einer alternativen Ausgestaltung kann die Referenzleitung 10 auch in einem die Messleitung 3 auskleidenden Liner eingebracht sein. Hier befindet sich die Referenzleitung 10 in der Ebene, die von den Elektroden 6 als Messebene aufgespannt wird, und dient der Messung oder Überwachung von Wirbelströmen. Solche Wirbelströme können abhängen vom Material der Messleitung 3, von der Leitfähigkeit des Mediums 2, von leitfähigen oder magnetischen Ablagerungen auf der Innenseite der Messleitung 3 oder von elektrisch leitfähigen oder magnetischen Partikeln im Medium 2. Die Referenzleitung 10 ist insbesondere frei von einem Kontakt mit dem Medium 2.

## Patentansprüche

1. Magnetisch-induktives Durchflussmessgerät (1) zur Durchflussmessung eines strömenden Mediums (2) mit einer Messleitung (3), mit einer Magnetfelderzeugungseinrichtung (4) zur Erzeugung eines die Messleitung (3) wenigstens teilweise senkrecht zu einer Längsachse (5) der Messleitung (3) durchsetzenden - insbesondere wechselnden - Magnetfeldes, mit mindestens zwei - insbesondere das Medium (2) berührenden - Elektroden (6) zum Abgreifen einer in dem strömenden Medium (2) induzierten Messspannung, wobei mindestens eine - insbesondere außerhalb der Messleitung (3) angeordnete - Zusatzmagnetfelderzeugungseinrichtung (7) zur Erzeugung eines die Messleitung (3) wenigstens teilweise durchsetzenden - insbesondere wechselnden - Zusatzmagnetfeldes vorgesehen ist,
wobei das Zusatzmagnetfeld zumindest teilweise parallel zu der Längsachse (5) der Messleitung (3) in dem Bereich der Messleitung (3) verläuft, in dem sich die zwei Elektroden (6) befinden,
wobei das Zusatzmagnetfeld der Ermittlung des Maßes, um das die Messleitung mit dem Medium gefüllt ist, dient,
**dadurch gekennzeichnet,**
**dass** die - insbesondere identisch ausgestalteten - zwei Elektroden (6) streifenförmig ausgestaltet sind,
**dass** sich die zwei Elektroden (6) längs der Längsachse (5) der Messleitung (3) im Wesentlichen auf einer Höhe einander gegenüberliegen und dass jede der zwei Elektroden (6) zwei Stirnseiten (8) aufweist, und dass das Durchflussmessgerät weiter in diesem Bereich elektrische Messabgriffe aufweist, die derart eingerichtet sind im Betrieb jeweils ein Messsignal der induzierten Messspannung von einem Paar benachbarter Stirnseiten (8) abzugreifen.

2. Magnetisch-induktives Durchflussmessgerät (1) nach Anspruch 1, **dadurch gekennzeichnet, dass** die Magnetfelderzeugungseinrichtung (4) derart ausgestaltet ist, dass sie ein sich mit einer ersten Frequenz wechselndes Magnetfeld erzeugt, dass die Zusatzmagnetfelderzeugungseinrichtung (7) derart ausgestaltet ist, dass sie ein sich mit einer zweiten Frequenz wechselndes Zusatzmagnetfeld erzeugt, und dass die erste Frequenz und die zweite Frequenz unterschiedlich sind.

3. Magnetisch-induktives Durchflussmessgerät (1) nach einem der Ansprüche 1 bis 2, **dadurch gekennzeichnet, dass** mindestens eine Auswerteeinrichtung (9) vorgesehen ist, die derart ausgestaltet ist, dass sie mindestens ein von den zwei Elektroden (6) abgegriffenes Messsignal frequenzselektiv auswertet.

4. Magnetisch-induktives Durchflussmessgerät (1) nach Anspruch 3, **dadurch gekennzeichnet, dass** die Auswerteeinrichtung (9) derart ausgestaltet ist, dass sie zumindest aus dem mindestens einen Messsignal mit Hilfe eines - insbesondere von der Geometrie des Durchflussmessgerätes (1) im Bereich der zwei Elektroden (6) abhängigen - Korrekturfaktors und/oder mit Hilfe von Kalibrationsdaten den Füllstand des Mediums (2) ermittelt.

5. Magnetisch-induktives Durchflussmessgerät (1) nach einem der Ansprüche 1 bis 4, **dadurch gekennzeichnet, dass** die benachbarten Stirnseiten (8) relativ zum Umfang der Messleitung (3) voneinander beabstandet sind, wobei der Abstand zwischen den benachbarten Stirnseiten (8) maximal einem 45°-Winkel entspricht.

6. Magnetisch-induktives Durchflussmessgerät (1) nach einem der Ansprüche 1 bis 5, **dadurch gekennzeichnet, dass** die Zusatzmagnetfelderzeugungseinrichtung (7) mindestens zwei Spulen aufweist, von denen längs der Längsachse (5) der Messleitung (3) eine Spule vor und eine Spule hinter den zwei Elektroden (6) angeordnet ist.

## Claims

1. Magnetic inductive flowmeter (1) for flow measurement of a flowing medium (2) with a measuring line (3), with a magnetic field generator (4) for generating an - in particular alternating - magnetic field permeating the measuring line (3) at least partially perpendicular to a longitudinal axis (5) of the measuring line (3), with at least two electrodes (6) - in particular in contact with the medium (2) - for tapping a measuring voltage induced in the flowing medium (2),
wherein at least one supplementary magnetic field generator (7) - in particular arranged outside of the measuring line (3) - is provided for generating an - in particular alternating - supplementary magnetic field at least partially permeating the measuring line (3),
wherein the supplementary magnetic field runs at least partially parallel to the longitudinal axis (5) of the measuring line (3) in the region of the measuring line (3) in which the two electrodes (6) are located,
wherein the supplementary magnetic field is used for determining the measure to which the measuring line is filled with the medium,
**characterized in,**
**that** the two - in particular identically designed - electrodes (6) are designed as strips,
**that** the two electrodes (6) are located opposite one another at essentially the same location along the longitudinal axis (5) of the measuring line (3) that each of the two electrodes (6) has two end faces (8) and that the flowmeter has electric measuring taps in this region that are designed such that a measuring signal of the induced measuring voltage can be respectively tapped from a pair of adjacent end faces (8) during operation.

2. Magnetic inductive flowmeter (1) according to claim 1, **characterized in that** the magnetic field generator (4) is designed such that it generates an alternating magnetic field with a first frequency, that the supplementary magnetic field generator (7) is designed such that it generates an alternating supplementary magnetic field with a second frequency, and wherein the first frequency and the second frequency are different.

3. Magnetic inductive flowmeter (1) according to claim 1 or 2, **characterized in that** at least one evaluation device (9) is provided, which is designed such that it frequency-selectively evaluates at least one measuring signal tapped from the two electrodes.

4. Magnetic inductive flowmeter (1) according to claim 3, **characterized in that** the evaluation device (9) is designed for determining the fill level of the medium (2) at least from the at least one measuring signal with the aid of a correction factor - that is dependent on the geometry of the flowmeter in the region of the two electrodes - and/or with the aid of calibration data.

5. Magnetic inductive flowmeter (1) according to any one of claims 1 to 4, **characterized in that** the adjacent end faces (8) are spaced apart from one another in relation to the circumference of the measuring line (3), wherein the distance between the adjacent end faces (8) corresponds at most to a 45° angle.

6. Magnetic inductive flowmeter (1) according to any one of claims 1 to 5, **characterized in that** the supplementary magnetic field generator (7) has at least two coils, one of which is arranged ahead of the two electrodes (6) and the other of which is arranged behind the two electrodes (6) relative to the longitudinal axis (5) of the measuring line (3).

## Revendications

1. Débitmètre à induction magnétique (1) destiné à mesurer le débit d'un milieu circulant (2), comprenant une conduite de mesure (3), un dispositif de génération de champ magnétique (4) destiné à générer un champ magnétique, en particulier alternatif, traversant la conduite de mesure (3) au moins en partie, perpendiculairement à un axe longitudinal (5) de la conduite de mesure (3), au moins deux électrodes (6), en particulier en contact avec le milieu (2), destinées à prélever une tension de mesure induite dans le milieu circulant (2),
dans lequel au moins un dispositif de génération de champ magnétique auxiliaire (7), en particulier disposé à l'extérieur de la conduite de mesure (3), destiné à générer un champ magnétique auxiliaire, en particulier alternatif, traversant la conduite de mesure (3) au moins en partie, est prévu
le champ magnétique auxiliaire s'étendant au moins en partie en parallèle à l'axe longitudinal (5) de la conduite de mesure (3) au niveau de la conduite de mesure (3) où se trouvent les deux électrodes (6),
le champ magnétique auxiliaire servant à établir à quel point la conduite de mesure est remplie avec le milieu,
**caractérisé en ce que**
les deux électrodes (6), en particulier configurées de manière identique, sont configurées en forme de bande,
les deux électrodes (6) sont opposées l'une à l'autre le long de l'axe longitudinal (5) de la conduite de mesure (3) substantiellement à la même hauteur, et
chacune des deux électrodes (6) présente deux faces frontales (8), et
le débitmètre présente en outre dans cette zone des prises de mesure électrique qui sont orientées de façon à prélever en cours de fonctionnement respectivement un signal de mesure de la tension de mesure induite d'une paire de faces frontales voisines (8) .

2. Débitmètre à induction magnétique (1) selon la revendication 1, **caractérisé en ce que** le dispositif de génération de champ magnétique (4) est configuré de telle sorte qu'il génère un champ magnétique alternatif à une première fréquence, **en ce que** le dispositif de génération de champ magnétique auxiliaire (7) est configuré de telle sorte qu'il génère un champ magnétique auxiliaire alternatif à une deuxième fréquence, et **en ce que** la première fréquence et la deuxième fréquence sont différentes.

3. Débitmètre à induction magnétique (1) selon l'une quelconque des revendications 1 et 2, **caractérisé en ce qu'**au moins un dispositif d'évaluation (9) est prévu qui est configuré de telle sorte qu'il évalue de façon sélective en fréquence au moins un signal de mesure prélevé sur les deux électrodes (6).

4. Débitmètre à induction magnétique (1) selon la revendication 3, **caractérisé en ce que** le dispositif d'évaluation (9) est configuré de telle sorte qu'il établit le niveau de remplissage du milieu (2) au moins à partir dudit au moins un signal de mesure, à l'aide d'un facteur de correction, en particulier dépendant de la géométrie du débitmètre (1) au niveau des deux électrodes (6), et/ou à l'aide de données de calibrage.

5. Débitmètre à induction magnétique (1) selon l'une quelconque des revendications 1 à 4, **caractérisé en ce que** les faces frontales voisines (8) sont espacées les unes des autres par rapport à la circonférence de la conduite de mesure (3), la distance entre les faces frontales voisines (8) correspondant au maximum à un angle de 45°.

6. Débitmètre à induction magnétique (1) selon l'une quelconque des revendications 1 à 5, **caractérisé en ce que** le dispositif de génération de champ magnétique auxiliaire (7) présente au moins deux bobines dont une bobine est disposée avant et une bobine est disposée après les deux électrodes (6) le long de l'axe longitudinal (5) de la conduite de mesure (3).
